# EUROPEAN PATENT APPLICATION

(11) **EP 1 548 323 A1**
(43) Date of publication of application: **29.06.2005**
(21) Application number: 03751325.6
(22) Date of filing: 03.10.2003
(51) Int. Cl.: F16F 15/08, C08L 33/00, C08L 83/05

(54) **VIBRATION ABSORPTION MOUNT MATERIAL**

(30) Priority: 04.10.2002 JP 2002291908; 04.10.2002 JP 2002291911
(71) Applicant: Nok Corporation, Tokyo 105-8585 (JP); KANEKA CORPORATION, Osaka-shi, Osaka 530-8288 (JP)
(72) Inventor: FUJIMOTO, Kenichi, c/o NOK Corporation, Fujisawa-shi, Kanagawa 251-0042 (JP); KOJIMA, Yoshifumi, c/o NOK Corporation, Fujisawa-shi, Kanagawa 251-0042 (JP); KOGA, Atsushi, c/o NOK Corporation, Fujisawa-shi, Kanagawa 251-0042 (JP); NAKAGAWA, Yoshiki, c/o KANEKA CORPORATION, Settsu-shi, Osaka 566-0072 (JP)
(74) Representative: HOFFMANN - EITLE
(86) International application number: PCT/JP2003/012718
(87) International publication number: WO 2004/031609

(57) **Abstract**

A material for vibration-absorbable mounts, which comprises a cured product of a composition comprising (A) an acrylic polymer having at least one alkenyl group capable of undergoing hydrosilylation reaction, (B) a hydrosilyl group-containing compound and (C) a hydrosilylation catalyst as essential components, has a distinguished vibration-absorbing characteristic such as a loss tangent (tan δ) of 0.5 or more, and also a distinguished heat resistance, and thus is sufficiently suitable for vibration-absorbable mounts for HDDs as mounted on automobiles. Furthermore, the material for vibration-absorbable mounts has distinguished heat resistance, oil resistance, vibration-absorbing characteristic, compression set characteristic, low hardness, cleanliness (out gassing property and non-corrosiveness), etc. and thus can be effectively used as vibration-absorbable mounts for electric and electronic parts provided with opto-magnetic drives, for example, CD, DVD, HDD, etc. for automobiles, and also as vibration-absorbable pads, etc. for electric and electronic part units.

## Description

### TECHNICAL FIELD

The present invention relates to a material for vibration-absorbable mounts, and more particularly a material for vibration-absorbable mounts for suitable use in electric and electronic parts of automobiles, their units, etc.

### BACKGROUND ART

To meet increasing demands for smaller sizes and higher performances, electronic device products have been subject to incessant improvement. Down-sizing of electronic memory devices such as CD, DVD, HDD, etc., particularly HDD (hard disc drive) has been in progress, for example, from 3.5 inches to 2.5 inches, and even further to 1 inch. Similarly, an improvement of performance (improvement of memory capacity) has been also in progress.

For improvement of the performance, it is effective to increase the revolution per minute, memory density of disc and the mounting number of discs in HDD. However, the increase in the memory density has been already approaching its limit, and the increase in the mounting number of discs is against the desired down-sizing tendency and thus not recommendable, so the increase in the revolutions per minute of disc is now the main stream of the improvement.

As a result, vibrations generated from the disc inside are in an increasing tendency, and thus it is now a problem to diminish such vibrations. Particularly in case of using the HDD as a server, several tens of discs are used in series, and serious troubles of vibrations generated from the individual HDDs have been so far experienced.

On the other hand, HDDs have been recently used in videos, cameras, car navigators, etc. as electronic memory devices besides personal computers, and particularly in case of using HDDs in heavy vibration-generating circumstance, for example, as mounted on automobiles, etc., it is necessary to suppress such heavy vibrations from the outside of HDD. Furthermore, HDDs are required to have a sufficient heat resistance to internally generated heat due to high speed disc revolutions or to exposure of disc under high temperature circumstances within automobiles, for example, during the summer time.

As materials for vibration-absorbable mounts for electric and electronic parts or their units using opto-magnetic drives for CD, DVD, HDD, etc., natural rubber, butyl rubber, silicone rubber, etc. have been so far used. These rubber materials can fully attain their performance, in spite of the afore-mentioned problems, so long as they are used for the domestic purpose or the office purpose, but when used for automobiles or industrial machinery the circumstances in which they are used are so severe that particularly their heat resistance and vibration durability become a problem.

Particularly, in case of materials for vibration-absorbable mounts, when used in a contact state with electric and electronic parts or their units as mounted on automobiles with or without using an adhesive, the following characteristics are required:
(1) High heat resistance and oil resistance
(2) High vibration-absorbing characteristic
(3) Low compression set characteristic
(4) Low hardness
(5) High cleanliness (low out gassing property and non-corrosiveness)

### DISCLOSURE OF THE INVENTION

The object of the present invention is to provide a material for vibration-absorbable mounts for electric and electronic parts, provided with opto-magnetic drives for CD, DVD, HDD, etc. for use in automobiles and for vibration-absorbable mounts in effective use as vibration-absorbable pads, etc. for electric and electronic part units, showing distinguished heat resistance and oil resistance, vibration-absorbing characteristic, compression set characteristic, low hardness, cleanliness (out gassing property and non-corrosiveness), etc. Another object of the present invention is to provide a material for vibration-absorbable mounts for HDDs as mounted on automobiles, showing a distinguished vibration-absorbing characteristic, even if used at elevated temperatures for a long time.

The objects of the present invention can be attained by a material for vibration-absorbable mounts, which comprises a cured product of a composition comprising (A) an acrylic polymer having at least one alkenyl group capable of undergoing hydrosilylation reaction, (B) a hydrosilyl group-containing compound and (C) a hydrosilylation catalyst as essential components. When the present material for vibration-absorbable mounts is used for vibration-absorbable mounts for HDD as mounted on automobiles, the material for vibration-absorbable mounts is used as fixed to a cover of a HDD-encased box as the mounting base.

An acrylic acid ester monomer, which constitutes the main chain of acrylic polymer having at least one alkenyl group capable of undergoing hydrosilylation reaction, preferably at least one alkenyl group at a terminal position of the polymer, as Component (A), is not particularly limited, and can be used upon selection of desired one.

For example, such acrylic acid ester monomers can be used as acrylic acid esters such as methyl acrylate, ethyl acrylate, propyl acrylate, isopropyl acrylate, n-butyl acrylate, isobutyl acrylate, t-butyl acrylate, n-pentyl acrylate, n-hexyl acrylate, cyclohexyl acrylate, n-heptyl acrylate, n-octyl acrylate, 2-ethylhexyl acrylate, nonyl acrylate, decyl acrylate, dodecyl acrylate, phenyl acrylate, tolyl acrylate, benzyl acrylate, 2-methoxyethyl acrylate, 3-methoxybutyl acrylate, 2-hydroxyethyl acrylate, 2-hydroxypropyl acrylate, stearyl acrylate, glycidyl acrylate, 2-aminoethyl acrylate, trifluoromethylmethyl acrylate, 2-trifluoromethylethyl acrylate, 2-perfluoroethylethyl acrylate, 2-perfluoroethyl-2-perfluorobutylethyl acrylate, perfluoroethyl acrylate, perfluoromethyl acrylate, diperfluoromethylmethyl acrylate, 2-perfluoromethyl-2-perfluoroethylethyl acrylate, 2-perfluorohexylethyl acrylate, 2-perfluorodecylethyl acrylate, 2-perfluorohexadecylethyl acrylate, etc., or methacrylic acid esters corresponding thereto, ethylene oxide adducts of acrylic acid, γ -(methacryloyloxypropyl)-trimethoxysilane, etc. Acrylic acid or methacrylic acid can be also used.

Above all, acrylic acid esters or methacrylic acid esters can be preferably used from the viewpoint of product physical properties, etc. It is particularly preferable to use one or a combination of at least two of acrylic acid esters, for example, butyl acrylate, ethyl acrylate, 2-methoxyethyl acrylate, 2-ethoxyethyl acrylate, etc.

In the present invention, these preferable monomers can be subjected to random copolymerization or block copolymerization with other monomers, where it is preferable that acrylic acid esters or methacrylic acid esters as the preferable monomers are copolymerized in a proportion of 60% by weight or more.

Together with these acrylate-based or methacrylate-based monomers, other monomers can be subjected to the copolymerization in a proportion of about 30% by weight or less. Such monomers include, for example, styrene-based monomers such as styrene, vinyltoluene, α -methylstyrene, chlorostyrene, styrenesulfonic acid or its salts, etc.; fluorine-containing vinyl monomers such as perfluoroethylene, perfluoropropylene, vinylidene fluoride, etc.; silicon-containing vinyl-based monomers such as vinyltrimethoxysilane, vinyltriethoxysilane, etc.; maleic acid anhydride, maleic acid and monoalkyl esters or dialkyl esters of maleic acid; fumaric acid and monoalkyl esters or dialkyl esters of fumaric acid; maleimide-based monomers such as maleimide, methylmaleimide, ethylmaleimide, propylmaleimide, butylmaleimide, hexylmaleimide, octylmaleimide, dodecylmaleimide, stearylmaleimide, phenylmaleimide, cyclohexylmaleimide, etc.; nitrile group-containing vinyl-based monomers such as acrylonitrile, methacrylonitrile, etc.; amide group-containing vinyl-based monomers such as acrylamide, methacrylamide, etc.; vinyl esters such as vinyl acetate, vinyl propionate, vinyl pivalate, vinyl benzoate, vinyl cinnamate, etc.; olefins such as ethylene, propylene, etc.; conjugated dienes such as butadiene, isoprene, etc.; vinyl chloride, vinylidene chloride, allyl chloride, allyl alcohol, etc.

At least one alkenyl group capable of undergoing hydrosilylation reaction is introduced into the acrylic polymer, preferably at a terminal position of the polymer, resulting from the copolymerization of these monomers. The introduced alkenyl group can be represented by the following general formula:

CH₂=C(R)-

where R is a hydrogen atom or an organic group having 1-20 carbon atoms. The organic group includes, for example, alkyl groups having 1-20 carbon atoms, aryl groups having 6-20 carbon atoms, aralkyl groups having 7-20 carbon atoms, etc. In view of the reactivity with the hydrosilyl group-containing compounds, an alkenyl group whose R is a hydrogen atom or a methyl group, preferably a hydrogen atom, is introduced.

Introduction of the alkenyl group can be carried out by the following methods:
(a) A method of allowing a compound having one alkenyl group of higher polymerizability and another alkenyl group of lower polymerizability together in the molecule, represented by the following general formula:

   CH₂=CR¹-R²-R³-CR¹=CH₂

   R¹ : a hydrogen atom or a methyl group
   R² : an ester group or an o-, m- or p-phenylene group where in case of an ester group, the compound is a (meth)-acrylate-based compound and in case of a phenylene group, the compound is a styrene-based compound
   R³ : an organic group of C₁-C₂₀, which may be directly bonded or may have at least one ether bond,
   such as CH₂=CHCOO(CH₂)ₙCH=CH₂, CH₂=C(CH₃)COO(CH₂)nCH=CH₂, o-, m- or p-divinyl benzene, etc. to react with the desired acrylic monomer in the synthesis of acrylic polymers by living radical polymerization,
(b) A method of subjecting a compound having at least two alkenyl groups of lower polymerizability as a second monomer, that is, a compound represented by the following general formula:

   CH₂=CR¹-R⁴-CR¹=CH₂

   R¹: a hydrogen atom or a methyl group
   R⁴ : an organic group of C₁-C₂₀, which may have at least one ether bond,
   such as 1,5-hexadiene, 1,7-octadiene, 1,9-decadiene, etc. to reaction at the final stage of polymerization reaction or after the completion of reaction of the desired monomer in the synthesis of acrylic polymers by living radical polymerization, the method being much easier of controlling the alkenyl groups to be introduced into one molecule, and
(c) A method of replacing the halogen atom in the acrylic polymer with an alkenyl group such as a method of replacing the halogen atom in the polymer with an alkenyl group by allowing various organometallic compounds having an alkenyl group to act on acrylic polymers having at least one halogen atom.

Number of alkenyl groups to be introduced into the acrylic polymers by these methods is 1-10, preferably 2-8 per polymer molecule.

Acrylic polymers having the alkenyl group for use in the present invention are generally in a liquid state at the ordinary temperature with a number average molecular weight Mn of 500 or more, preferably 1,000-100,000. The lower the molecular weight, the less appear the proper characteristics of the acrylic polymers, whereas the higher the molecular weight, the harder is the handling.

Molecular weight distribution of the acrylic polymers for use in the present invention, that is, a ratio of weight average molecular weight to number average molecular weight (Mw/Mn), determined by gel permeation chromatography (GPC), is generally 1.8 or less, preferably 1.5 or less, more preferably 1.3 or less. A ratio of more than 1.8 is not preferable because of lowering of physical properties, etc. In the molecular weight determination by GPC, chloroform was used as a mobile phase in a polystyrene gel column, where the determination was made in terms of polystyrene.

The alkenyl-containing acrylic polymers can be produced by various polymerization processes. Though the processes are not particularly limited, radical polymerization processes are preferable from the viewpoint of monomer versatility and easy control. Among the radical polymerization processes, a living polymerization process is more preferable, and an atom transfer radical polymerization process is particularly preferable.

Generally, it has been deemed that reaction control of the radical polymerization reaction is hard to conduct, because of higher polymerization rate and easy occurrence of termination reaction due to coupling of radicals themselves, whereas the living radical reaction process has such characteristics that it can hardly suffer from side reactions such as termination reactions at growing chain ends in the polymer, etc. owing to use of a special polymerization system, and also can produce polymers of narrow molecular weight distribution (Mw/Mn : about 1.1- about 1.5) and furthermore can freely control the molecular weight by a charging ratio of an initiator to monomers.

Thus, the living polymerization process can not only produce polymers of narrow molecular weight distribution and, furthermore, low viscosity, when the resulting polymers are in a liquid state, but can also introduce monomers having a specific functional group into the polymers at substantially desired positions, and thus can be regarded as a preferable process for producing alkenyl-containing acrylic polymers.

In a narrow sense, the living polymerization process refers to polymerization capable of keeping molecular chains to grow, while always maintaining the terminals in an active state, but generally also covers a pseudo-living polymerization capable of keeping the molecular chain to grow under an equilibrium state of both inactivated terminals and activated terminals as well. The term "living polymerization process" used in the present invention refers to the latter one.

Hydrosilyl group-containing compound as component (B) is not particularly limited, so long as it is a curable compound by cross-linking with an acrylic polymers having at least one alkenyl group at the terminals as component (A), and includes, for example, compounds represented by the following general fomulae:

R⁵ ₃SiO[SiR⁵ ₂O]a[SiHR⁶O]b[SiR⁶R⁷O]c SiR⁶ ₃

R⁵ ₂HSiO[SiR⁵ ₂O]a[SiHR⁶O]b[SiR⁶R⁷O]c SiHR⁵ ₂

R⁵, R⁶ : alkyl groups of C₁-C₆ or phenyl group
R⁷ : alkyl groups of C₁-C₁₀ or aralkyl groups
   0≦a≦100
   2≦b≦100
   0≦c≦ 100 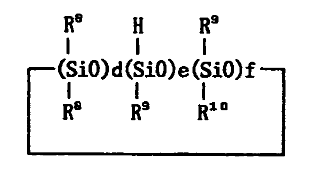
R⁸, R⁹ : alkyl groups of C₁-C₆ or phenyl group
R¹⁰ : alkyl groups of C₁-C₁₀ or aralkyl groups
   0≦d≦8
   2≦e≦10
   0≦f≦8
   3≦d+e+f≦10

Above all, compounds such as linear polysiloxanes, cyclic siloxanes, etc. having at least 1.1 hydrosilyl groups in the molecule on average can be preferably used. Siloxane compounds having an alkyl group, a phenyl group, an alkylphenyl group, etc. besides the hydrosilyl groups are more preferable from the viewpoint of compatibility with acrylic polymers. One or also a combination of at least two of the hydrosilyl group-containing compounds can be used in the present invention.

The alkenyl-containing acrylic polymer and the hydrosilyl group-containing compound can be used by mixing in a desired proportion, but in view of curability they are used in a molar ratio of the alkenyl group of acrylic polymer to the hydrosilyl group of hydrosilyl group-containing compound of 5-0.2, preferably 2.5-0.4. In a molar ratio of more than 5, only tacky cured products of low strength will be obtained due to incomplete curing, whereas in a molar ratio of less than 0.2, a large amount of active hydrosilyl groups will remain in the cured products even after the curing, and uniformly cured products of sufficient strength will be no more obtained due to generation of cracks or voids.

Hydrosilylation catalyst as component (C) is also not particularly limited, and any desired catalyst can be used. It includes, for example, chloroplatinic acid, simple platinum, solid platinum supported on carriers such as alumina, silica, carbon black, etc., furthermore the following complexes such as:
Platinum-vinylsiloxane complexes:
   Ptn(CH₂=CHMe₂SiOSiMe₂CH=CH₂)n
   Pt[(MeCH=CHSiO)₄]m
Platinum-phosphine complexes:
   Pt(PPh₃)₄
   Pt(PBu₃)₄
Platinum-phosphite complexes:
   Pt[P(OPh)₃]₄
   Pt[P(OBu)₃]₄

Me : methyl
Bu : butyl
Ph : phenyl
n, m : positive integers
and other catalysts than the platinum compounds, e.g. RhCl(PPh₃)₃, RhCl₃, Rh/Al₂O₃, RuCl₃, IrCl₃, FeCl₃, AlCl₃, PdCl₂ · 2H₂O, NiCl₂, TiCl₄, etc. Furthermore, platinum-hydrocarbon complex (US Patent No. 3,159,601 and US Patent No. 3,159,662), platinum-alcoholato complex (US Patent No. 3,220,972), etc. can be also used in the present invention. These hydrosilylation catalyst can be used alone or in combination of at least two thereof. Among these hydrosilylation catalysts, chloroplatinic acid, platinum-olefin complexes, platinum-vinylsiloxane complexes, etc. are preferable used from the viewpoint of catalyst activity

The amount of the catalyst is also not particularly limited, and is used in a range of 10⁻¹-10⁻⁸ moles, preferably 10⁻²-10⁻⁶ moles per mole of alkenyl group in the component (A) polymer. Generally, the hydrosilylation catalyst is expensive and corrosive, and sometimes can generate a large amount of hydrogen to produce foamed cured products. Thus, it is preferable not to use more than 10⁻¹ mole.

If any one of these three essential components (A), (B) and (C) is not used, such inconveniences will be encountered as failing to obtain vulcanization molding products (cured products) or lowering of rubber elasticity or elongation of the product even if obtained.

The composition comprising the afore-mentioned essential components can be admixed, if necessary, with various rubber compounding ingredients usually used in the rubber industries such as a reinforcing agent, e.g. carbon black, white carbon, etc.; a filler, e.g. diatomaceous earth, talc, clay, graphite, calcium silicate, barium sulfate, calcium carbonate, magnesium carbonate, aluminium hydroxide, mica, etc.; a powdery solid filler, e.g. various metal powders, glass powders, ceramic powders, granular or powdery polymer, etc.; a small amount of thermoplastic resin or rubber for improving the abrasion resistance, moldability, etc., short-length fibers for improving the strength or rigidity, a processing aid, e.g. stearic acid, palmitic acid, paraffin wax, etc.; an acid acceptor, e.g. zinc oxide, magnesium oxide, etc.; antioxidants of amine series, phenol series, imidazole series, etc; a stabilizer, a plasticizer, a tackifier, a mold release agent, a flame retardant, pigments, etc. It is preferable from the operational viewpoint to use liquid compounding ingredients.

The composition can be admixed with a curing-adjusting agent such as 3,5-dimethyl-1-hexyne-3-ol, 3,5-dimethyl-1-hexyne-5-01, etc. in a proportion of not more than about 5 parts by weight, preferably about 0.01-about 1 part by weight, to 100 parts by weight of sum total of components (A), (B) and (C). The curing-adjusting agent has a function of adjusting the curing rate and preventing scorch.

In view of use as the material for vibration-absorbable mounts, it is preferable that the surface hardness of cured products obtained by curing the composition is 45 or less. To obtain cured product having a low hardness, i.e. Durometer A hardness of 45 or less (JIS K6253), it is also possible to adjust a proportion of various reinforcing agents or fillers to be added to the composition, but reinforcing agents or fillers containing sulfur, halogen, etc. acting as a catalyst poison are not preferable. A proportion of the reinforcing agents or fillers is about 100 parts by weight or less, usually 1 to 100 parts by weight, preferably about 5 to about 80 parts by weight, on the basis of 100 parts by weight of sum total of Components (A), (B) and (C). In the case that the proportion of the reinforcing agents or fillers is less than 1 parts by weight or zero, the hardness can be made 45 or less, but the appearance of the products will be deteriorated, whereas in a higher proportion than about 100 parts by weight the hardness will be too high. The hardness can be also adjusted by using a plasticizer, etc. together with the reinforcing agents or fillers.

The composition can be prepared by kneading with a Banbury mixer, a planetary mixer, a Brabender, a kneader, a high shearing type mixter, a roll mill, a three-roll mill, etc. Curing (vulcanization molding) of the composition can be carried out by heating usually at about 100° to about 200 °C for about 1 to about 120 minutes, using an injection molding machine, a compression molding machine, a vulcanization press, etc., and if necessary, secondary vulcanization can be carried out by heating at about 120° to about 200°C for about 1/2 to about 24 hours. Curing can be also carried out by leaving the composition to stand at room temperature for 24 hours or more without any heating.

The resulting cured products have a Durometer A hardness of 45 or less and a distinguished vibration-absorbing characteristic such as a loss tangent (tan δ) of 0.5 or more. The cured products are used in such a contact state as fixed to electric and electronic parts or their units, and thus have usually a plate shape having a thickness of about 0.05 to about 50mm.

### BRIEF DESCRIPTION OF DRAWINGS

Fig. 1 is a perspective view showing the mounting state of the present vibration-absorbable mount on a mounting base.
Fig. 2 is cross-sectional views showing several embodiments of ways to fix the vibration-absorbable mount to the mounting base.
Fig. 3 is a perspective view showing the mounting state of the present vibration-absorbable mount of another embodiment on a mounting base.
Fig. 4 is a perspective view showing the mounting state of the conventional vibration-absorbable mount on a mounting base.

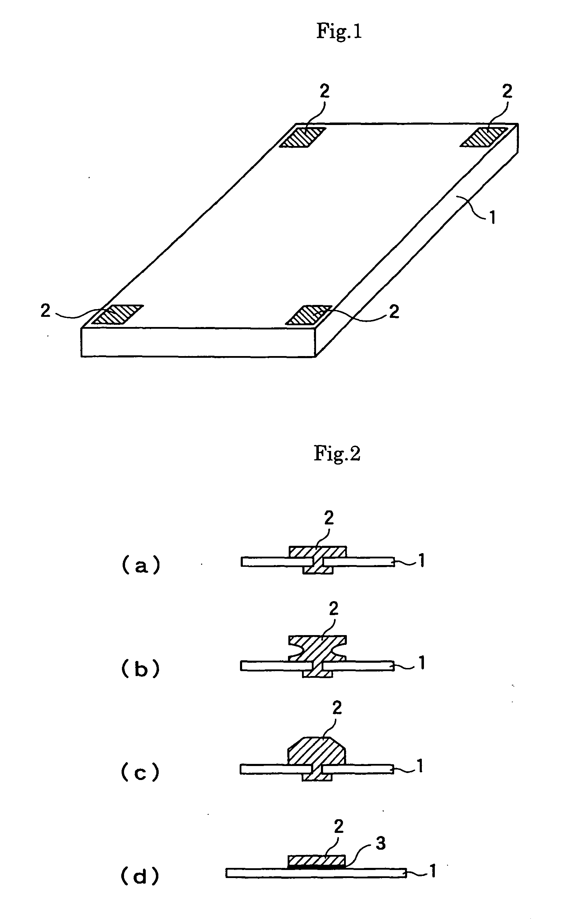

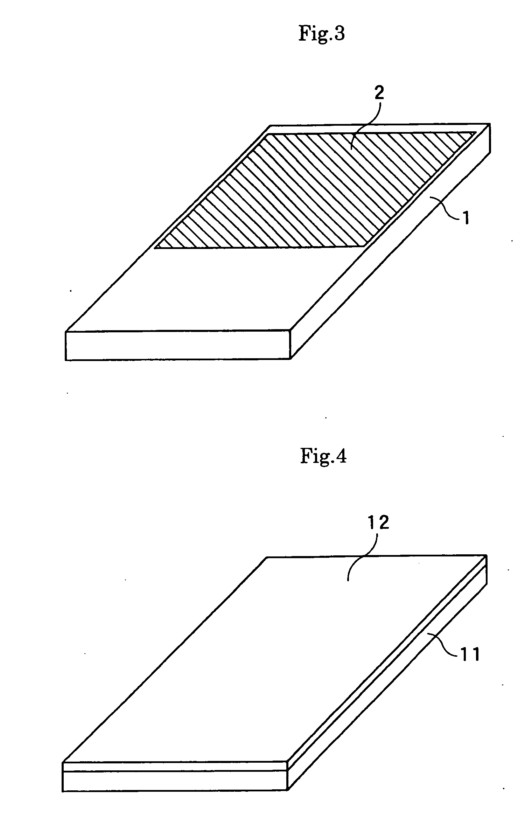

The vibration-absorbable mount for HDD as mounted on automobiles, molded from the present sealing material, is used as fixed to a cover of an HDD-encased box. In the conventional art, only cover 12 made of aluminum, etc. is provided on mounting base 11 as shown in the perspective view of Fig. 4, whereas in the present invention vibration-absorbable mat 2 is provided on four corners of a box cover as mounting base 1 (Fig. 1) or on an approximately half area (Fig. 3).

Vibration-absorbable mat 2 can be provided on mounting base 1 in any manner, for example, by fixation of vibration-absorbable mat 2 to both sides of the cover by physical fitting or through perforations as shown in cross-sectional views (a)-(c) of Fig. 2, or by adhesion of vibration-absorbable mat 2 to mounting base 1 by adhesive 3, as shown in cross-sectional view (d) of Fig. 2. The adhesive in use for this purpose includes adhesives of epoxy resin series and phenol resin series, coupling agents of silane series and isocyanate series, etc., and application of adhesive 3 to mounting base 1, can be carried out in any manner, for example, by dipping, spraying, screen printing, brushing, stamping, etc.

### BEST MODE FOR CARRYING OUT THE INVENTION

The present invention will be described below, referring to Examples.

Examples 1 to 4 and Comparative Example 1

| Composition component | | | | | |
|---|---|---|---|---|---|
| (Parts by weight) | Ex. 1 | Ex. 2 | Comp. Ex. 1 | Ex. 3 | Ex. 4 |
| Acrylic polymer | 93.9 | 93.9 | 93.9 | 93.9 | 93.9 |
| Hydrosilyl group-containing compound | 5.6 | 5.6 | 5.6 | 5.6 | 5.6 |
| Hydrosilylation catalyst | 0.05 | 0.05 | 0.05 | 0.05 | 0.05 |
| Carbon black (N990) | 5 | 25 | 120 | | |
| White carbon (Aerosil R974, product of Nihon Aerosil Co.) | | | | 5 | 18 |
| Antioxidant (Nocrack CD, product of Ouchi Shinko Kagaku K. K.) | 1 | 1 | 1 | 1 | 1 |
| Polyether-ester-based placticizer (RS700, product of Asahi Denka Kogyo K. K.) | | 5 | 5 | | |
| 3,5-dimethyl-1-hexine-3-ol (Curing control agent) | 0.1 | 0.1 | 0.1 | 0.1 | 0.1 |

The acrylic polymer used herein was a copolymer comprising butyl acrylate, ethyl acrylate and 2-methoxyethyl acrylate, further copolymerized with 1,7-octadiene to introduce alkenyl groups therein, and having a number average molecular weight Mn of 18,000, a molecular weight distribution (Mw/Mn) of 1.1 and average number of alkenyl groups introduced into one molecule of the copolymer being 1.9. The hydrosilyl group-containing compound used herein was a linear siloxane having 5 hydrosilyl groups on average and 5 α -methylstyrene groups on average in one molecule (amount of Si-H groups : 3.70 m moles/g). The hydrosilylation catalyst used herein was a xylene solution containing 3 wt.% of 1,1,3,3-tetramethyl-1,3-divinylsiloxane complex of zero-valent platinum.

The foregoing components were thoroughly mixed together by a three-roll mill and then subjected to vulcanization molding at 180°C for ten minutes by a compression molding machine. The resulting vulcanization molding products were tested to determine the following properties:
Normal state physical properties, compression set, heat resistance test (changes in physical properties after heating at 150°C for 70 hours) and oil resistance (changes in physical properties after dipping in lubricating oil No. 3 at 150°C for 70 hours) : according to JIS K6253, K6251, K6262, K6257, and K6258
Los tangent : determined by a viscoelasticity tester at the frequency of 50 Hz and room temperature
Out gassing property : GCMS method (an amount of a gas generated per gram of a sample after heat extration at 120°C for one hour)
Metal corrosion : visual observation of corrosion state of aluminum plates after heating an O-ring, 25mm in inner diameter, as sandwiched between the aluminum plates, at 100°C for 168 hours

### COMPARATIVE EXAMPLE 2

| | Parts by weight |
|---|---|
| Acrylic rubber (Nipol AR 72HF, product of Nippon Zeon Co., Ltd. | 100 |
| Sulfur | 0.5 |
| Sodium stearate | 1 |
| Potassium stearate | 2 |
| Stearic acid | 1 |

The foregoing components were thoroughly mixed together by a three-roll mill, and subjected to vulcanization molding at 180°C for 6 minutes by a compression molding machine and then to secondary vulcanization at 150°C for 5 hours. The resulting vulcanization product was tested in the same manner as in Examples 1 to 4.

### COMPARATIVE EXAMPLE 3

| | Parts by weight |
|---|---|
| Butyl rubber (Butyl 365, product of Exxon Corp.) | 100 |
| Sulfur | 1 |
| Zinc oxide (ZnO) | 5 |
| Stearic acid | 1 |
| Tetramethyl thiuram monosulfide | 1 |
| Dioctyl sebacate | 20 |

The foregoing components were thoroughly mixed together by a three-roll mill, and then subjected to vulcanization molding at 170°C for 5 minutes by a compression molding machine. The resulting vulcanization molding product was tested in the same manner as in Examples 1 to 4.

Results of determination in the foregoing Examples 1 to 4 and Comparative Examples 1 to 3 are shown in the following Table 1.

**Table 1**

| Test item | | Ex.1 | Ex.2 | Comp. Ex.1 | Ex.3 | Ex.4 | Comp. Ex.2 | Comp. Ex.3 |
|---|---|---|---|---|---|---|---|---|
| [Normal state physical properties] | | | | | | | | |
| Hardness Durometer | A (point) | 10 | 40 | 72 | 12 | 32 | 42 | 48 |
| Strength at break | (MPa) | 4.2 | 7.0 | 9.6 | 3.9 | 4.8 | 1.6 | 2.0 |
| Elongation at break | (%) | 280 | 200 | 105 | 300 | 210 | 120 | 140 |

| [Compression set] | | | | | | | | |
|---|---|---|---|---|---|---|---|---|
| 150°C for 70 hours | (%) | 12 | 19 | 42 | 14 | 22 | 64 | 58 |

| [Heat resistance test] | | | | | | | | |
|---|---|---|---|---|---|---|---|---|
| Change in hardness | (point) | +3 | +2 | +2 | +4 | +2 | +5 | +10 |
| Change in strength at break | (%) | +10 | +5 | +16 | +12 | +4 | -19 | -38 |
| Change in elongation at break | (%) | +6 | +9 | -18 | -7 | -12 | -20 | -42 |

| [Oil resistance test] | | | | | | | | |
|---|---|---|---|---|---|---|---|---|
| Change in hardness | (point) | -5 | -3 | -2 | -5 | -4 | -6 | Failed |
| Change in strength at break | (%) | -16 | -12 | -23 | -18 | -15 | -30 | to |
| Change in elongation at break | (%) | -18 | -19 | -26 | -13 | -12 | -39 | determine |
| Change in volume | (%) | +18.0 | +15.2 | +14.8 | +19.1 | +17.3 | +19.6 | |

| [Loss tangent] | | | | | | | | |
|---|---|---|---|---|---|---|---|---|
| tan δ | | 0.82 | 0.64 | 0.45 | 0.75 | 0.68 | 0.53 | 0.61 |

| [Out gassing property] | | | | | | | | |
|---|---|---|---|---|---|---|---|---|
| Amount of gas generated | (*µ*g/g) | 40 | 24 | 18 | 38 | 26 | 80 | 150 |

| [Metal corrosion] | | | | | | | | |
|---|---|---|---|---|---|---|---|---|
| Occurrence of corrosion | | None | None | None | None | None | Yes | Yes |

The following conclusion can be derived from the foregoing results.

Products obtained from the compositions of Examples of the present invention had a low hardness, distinguished vibration-absorbing characteristic, and also better heat resistance and oil resistance, whereas the product of Comparative Example 1 had a higher hardness and poor vibration-absorbing characteristic, and the product of Comparative Example 2 using acrylic rubber had lower strength and elongation, poor compression set characteristic, and high corrosiveness, and found to be unsuitable as a vibration-absorbable mount. The product of Comparative Example 3 using butyl rubber had better vibration-absorbing characteristics, but lower strength and elongation and a considerably low heat resistance.

### EXAMPLE 5

| | Parts by weight |
|---|---|
| Acrylic polymer (the same as used in Example 1) | 100 |
| Hydrosilyl group-containing compound (the same as used in Example 1) | 6 |
| Hydrosilylation catalyst (the same as used in Example 1) | 0.05 |
| White carbon (Aerosil R974) | 25 |
| Curing control agent (3,5-dimethyl-1-hexine-3-ol) | 0.1 |
| Antioxidant (Irganox 1010, product of Ciba Specialty Chemical Co.) | 2 |

### EXAMPLE 6

In Example 5, no white carbon was used.

### EXAMPLE 7

In Example 5, the amount of white carbon was changed to 30 parts by weight.

Mixtures each obtained in the foregoing Examples 5 to 7 were left to stand at room temperature for 24 hours to make defoaming, and then poured into test sheet molds (150 × 150 × 2mm) and subjected to compression molding under conditions of 180°C and 100MPa for 10 minutes. The resulting test sheets were subjected to determination of hardness, and tang δ before and after heated aging test.
Hardness : Three test sheets were laid one upon another and subjected to determination according to JIS K6253
Initial tan δ : determined by a viscoelasticity tester under conditions of frequencies of 10Hz and 100Hz, initial strain of 10%, compression test mode and temperature of 25°C, where tan δ of 0.5 or more at frequencies of 10Hz and 100Hz was evaluated to be satisfactory (○) and that of less than 0.5 to be unsatisfactory (×)
Tan δ after heated aging test : test sheets were heated at 120°C for 168 hours and left to stand at room temperature, followed by determination and evaluation in the same manner as for the initial tan δ

The results thus obtained are shown in the following Table 2, where Comparative Example 4 refers to the results of determination and evaluation of vulcanized butyl rubber having the hardness (JIS Durometer A) of 50 and Comparative Example 5 refers to those of cross-linked EPDM having the hardness (JIS Durometer A) of 50.

**Table 2**

| Determination · evaluation item | Ex.5 | Ex.6 | Ex.7 | Comp. Ex.4 | Comp. Ex.5 |
|---|---|---|---|---|---|
| Hardness (JIS Durometer A) | 31 | 12 | 48 | 50 | 50 |
| Tan δ | | | | | |
| Initial | ○ | ○ | ○ | ○ | × |
| After heated aging test | ○ | ○ | ○ | × | × |

While inserting fittings comprising an aluminum plate (treated by electroless nickel plating to a thickness of 2 to 5 *µ*m), as shaped into a cover form in advance and coated with an epoxy resin-based adhesive (Threebond 2202, product of ThreeBond Co., Ltd.), into a mold, a gasket was injection molded to the cover of the aluminum plate for HDD using a liquid injection molding machine at a set temperature of 210° to 180°C, an injection pressure of 100MPa and an injection speed of 0.5 sec. with a cycle time of 30 sec. to obtain a cover-integrated gasket.

### INDUSTRIAL UTILITY

The present material for vibration-absorbable mounts has the following effects:
(1) Due to a low hardness, distinguished vibration-absorbing characteristics, and distinguished heat resistance and oil resistance, the present material can be effectively used for vibration-absorbable mounts for electric and electronic parts or their units of automobiles, using opto-magnetic drives for CD, DVD, HDD, etc.
(2) Due to the exclusion of a vulcanizing agent from use in contrast to the case of the conventional acrylic rubber, high cleanliness (low out gassing property and non-corrosiveness) and a low compression set characteristic due to hydrosilyl cross-linking can be obtained.
(3) Hardness can be made lower by controlling the amount of a filler to be added.
(4) Due to use of liquid acrylic rubber, molding and processing can be made with ease, and in contrast to the conventional millable type rubber, the kneading step can be simplified.
(5) In case of using the present material for vibration-absorbable mounts for HDDs, which are precision devices inhibited even from fine vibrations, as mounted on automobiles, the present material shows a distinguished vibration-absorbing characteristic such as loss tangent (tan δ) of 0.5 or more and also a distinguished heat resistance, and thus can be sufficiently suitable for desired purposes, ever if used under frequent vibrations circumstances as mounted on automobiles and elevated temperature circumstances.

## Claims

1. A material for vibration-absorbable mounts, which comprises a cured product of a composition comprising (A) an acrylic polymer having at least one alkenyl group capable of undergoing hydrosilylation reaction, (B) a hydrosilyl group-containing compound and (C) a hydrosilylation catalyst as essential components.

2. A material for vibration-absorbable mounts according to Claim 1, wherein a liquid acrylic polymer having a number average molecular weight Mn of 500 or more and a molecular weight distribution (Mw/Mn) of 1.8 or less is used as Component (A) of the composition.

3. A material for vibration-absorbable mounts according to Claim 1, wherein the cured product of the composition has a Duro A hardness of 45 or less.

4. A material for vibration-absorbable mounts according to Claim 1 or 3, wherein 100 parts by weight or less of a reinforcing agent or a filler is added to the composition on the basis of 100 parts by weight of sum total of Components (A), (B) and (C).

5. A material for vibration-absorbable mounts according to Claim 1, wherein the cured product of the composition has a loss tangent (tan δ) of 0.5 or more.

6. A material for vibration-absorbable mounts according to Claim 1, for use in a contact state with electric and electronic parts or their units as fixed thereto.

7. A material for vibration-absorbable mounts according to Claim 1, for use as vibration-absorbable mounts for HDDs as mounted on automobiles.

8. A material for vibration-absorbable mounts for HDDs as mounted on automobiles according to Claim 7, wherein the material for vibration-absorbable mounts is used as fixed to a cover of an HDD-encasing box.

## Amended claims

### Amended claims under Art. 19.1 PCT

**1.** (as amended). A material for vibration-absorbable mounts, which comprises a cured product of a composition comprising (A) an acrylic polymer having at least one alkenyl group capable of undergoing hydrosilylation reaction, (B) a hydrosilyl group-containing compound and (C) a hydrosilylation catalyst as essential components, the cured product having a loss tangent (tan δ) of 0.5 or more.

**2.** A material for vibration-absorbable mounts according to Claim 1, wherein a liquid acrylic polymer having a number average molecular weight Mn of 500 or more and a molecular weight distribution (Mw/Mn) of 1.8 or less is used as Component (A) of the composition.

**3.** A material for vibration-absorbable mounts according to Claim 1, wherein the cured product of the composition has a Duro A hardness of 45 or less.

**4.** A material for vibration-absorbable mounts according to Claim 1 or 3, wherein 100 parts by weight or less of a reinforcing agent or a filler is added to the composition on the basis of 100 parts by weight of sum total of Components (A), (B) and (C).

**5.** (deleted)

**6.** A material for vibration-absorbable mounts according to Claim 1, for use in a contact state with electric and electronic parts or their units as fixed thereto.

**7.** A material for vibration-absorbable mounts according to Claim 1, for use as vibration-absorbable mounts for HDDs as mounted on automobiles.

**8.** A material for vibration-absorbable mounts for HDDs as mounted on automobiles according to Claim 7, wherein the material for vibration-absorbable mounts is used as fixed to a cover of an HDD-encasing box.
